# EUROPÄISCHE PATENTSCHRIFT

(11) **EP 3 430 615 B1**
(45) Veröffentlichungstag und Bekanntmachung des Hinweises auf die Patenterteilung: **06.09.2023**
(21) Anmeldenummer: 17708752.5
(22) Anmeldetag: 02.03.2017
(51) Int. Cl.: G10L 15/22, G10L 25/63

(54) **FORTBEWEGUNGSMITTEL, SYSTEM UND VERFAHREN ZUR ANPASSUNG EINER LÄNGE EINER ERLAUBTEN SPRECHPAUSE IM RAHMEN EINER SPRACHEINGABE**
TRANSPORTATION MEANS, AND SYSTEM AND METHOD FOR ADAPTING THE LENGTH OF A PERMISSIBLE SPEECH PAUSE IN THE CONTEXT OF A SPEECH INPUT
MOYEN DE DÉPLACEMENT, SYSTÈME ET PROCÉDÉ D'AJUSTEMENT D'UNE LONGUEUR D'UNE PAUSE VOCALE AUTORISÉE LORS D'UNE ENTRÉE VOCALE

(30) Priorität: 16.03.2016 DE 102016204315
(43) Veröffentlichungstag der Anmeldung: 23.01.2019
(73) Patentinhaber: Bayerische Motoren Werke Aktiengesellschaft, 80809 München (DE)
(72) Erfinder: SCHWARZ, Felix, 80333 München (DE)
(86) Internationale Anmeldenummer: PCT/EP2017/054940
(87) Internationale Veröffentlichungsnummer: WO 2017/157684

(56) Entgegenhaltungen:
- EP-A1- 3 159 893
- WO-A1-00/70440
- WO-A1-2005/029465
- US-B1- 6 496 799
- US-B1- 9 437 186

## Beschreibung

Die vorliegende Erfindung betrifft ein Fortbewegungsmittel, ein Sprachdialogsystem sowie ein Verfahren zur Anpassung einer Länge einer erlaubten Sprechpause im Rahmen einer Spracheingabe. Insbesondere betrifft die vorliegende Erfindung eine intelligente Verwendung sensorisch erfasster Umstände, welche auf eine zukünftige Fortsetzung der Spracheingabe durch den Anwender hindeuten.

Im Stand der Technik sind Sprachkommando (Sprachdialog)- und Spracheingabesysteme bekannt, welche eine verbale Kommunikation zwischen einem technischen System und einem Anwender ermöglichen. Insbesondere in Fahrzeugen dienen derartige Systeme dazu, eine Interaktion zwischen dem Anwender und dem Fahrzeug mit geringstmöglicher Ablenkung des Anwenders zu ermöglichen.

DE 103 42 541 A1 offenbart ein System zur arbeitsbelastungsabhängigen Dialogführung, bei welchem eine erlaubte Sprachpause ("Timeout") zwischen einer Sprachausgabe/Sprachanweisung eines Systems und einem automatischen Abbruch einer Analyse eingehender Spracheingaben als Funktion einer Arbeitsbelastung des Anwenders dynamisch bemessen wird.

DE 11 2006 002 989 T5 offenbart eine Spracherkennungsvorrichtung, bei welcher eine Umgebungsbedingungserfassungseinrichtung darüber entscheidet, ob die aktuellen Umgebungsbedingungen für eine Veränderung einer Spracheingabepause, im Anschluss an welche eine automatische Abschaltung der Spracherkennung erfolgt.

DE 11 2011 105 136 T5 offenbart eine Spracherkennungsvorrichtung, bei welcher eine Time-out-Zeit in Abhängigkeit einer Fahrgeschwindigkeit sowie eines Fahrzustandes dynamisch bemessen wird, um das Ende einer Spracheingabe zu ermitteln.

EP 3 159 893 A1 betrifft ein Verfahren zur Erkennung eines Endes einer vom Anwender vorgenommenen Spracheingabe. Hierbei wird eine Identität eines Anwenders festgestellt und anhand einer Anwenderhistorie festgestellt, welche Spracheingabe-Pausenlänge für eine aktuelle Spracheingabe adäquat ist.

Weitere Beispiele von Sprachdialogsystemen sind in den Patentdokumenten WO 00/70440 A1 und US 6 496 799 B1 offenbart.

Es ist eine Aufgabe der vorliegenden Erfindung, eine bessere und sicherere Sprachinteraktion mit einer Anwenderschnittstelle zu ermöglichen.

Die vorstehend identifizierte Aufgabe wird erfindungsgemäß durch ein Verfahren zur Anpassung einer Länge einer erlaubten Sprechpause im Rahmen einer Spracheingabe gelöst. Das Verfahren kann beispielsweise in Anwenderschnittstellen für technische Apparaturen (z.B. Arbeitsmaschinen, Fortbewegungsmittel o.ä.) ausgeführt werden. Unter einer "erlaubten Sprechpause" wird eine solche Zeitdauer ohne substantielle Spracheingabe verstanden, welche verstreichen darf, ohne dass die Aufnahme und/oder Auswertung akustischer Signale automatisch beendet wird. Eine Schlüsseläußerung kann beispielsweise darauf hinweisen, dass der Anwender abgelenkt ist bzw. eine kontinuierliche Formulierung seiner Gedanken akut gestört ist. Dies kann beispielsweise aufgrund der Umstände auftreten. Beispielsweise kann der Anwender abgelenkt sein. Alternativ oder zusätzlich kann ein unvollständiger Satz in der Spracheingabe ermittelt werden, wozu der Sinngehalt ("Semantik") des Satzes evaluiert wird. Wird (mit einer vordefinierten Wahrscheinlichkeit) ermittelt, dass der Satz nicht vollendet wurde, ist die Wahrscheinlichkeit hoch, dass der Anwender die Spracheingabe noch nicht beenden möchte. Entsprechendes kann sich alternativ oder zusätzlich aus einer Satzmelodie der Spracheingabe ergeben. Verrät die Satzmelodie (insbesondere in Verbindung mit der Kategorie des Satzes ("Frage"-/"Aussage"-Satz)), dass der Satz noch nicht beendet ist bzw. der Anwender die Spracheingabe fortsetzen möchte, kann die fortgesetzte Spracheingabe abgewartet werden. Sofern die Semantik der Spracheingabe analysiert wird, kann auch ein Komplexitätsgrad der Spracheingabe und die damit verbundenen hohe kognitive Arbeitsbelastung des Anwenders zum Anlass genommen werden anzunehmen, dass der Anwender die Spracheingabe trotz einer aktuellen längeren Sprechpause fortsetzen möchte. Alternativ oder zusätzlich kann das Lebensalter des Anwenders datentechnisch repräsentiert werden und Kategorien sprachtechnischer Leistungsfähigkeit zugeordnet werden, auf Basis welcher entschieden wird, ob der Anwender eher zu kurzen oder zu langen Sprechpausen neigt. In jedem Fall wird eine zeitliche Überschneidung einer Ausgabe der Anwenderschnittstelle bzw. des erfindungsgemäß ausgestatteten Fortbewegungsmittels mit der Spracheingabe festgestellt und daher die Systemausgabe (ein Pop-up, ein Gong, eine Änderung einer Anzeige, o.ä.) als ursächlich für die Sprechpause bewertet werden. Optional kann zusätzlich die Identität des die Spracheingabe vornehmenden Anwenders festgestellt und mit einem vordefinierten Anwenderprofil (beispielsweise in einem Datenspeicher repräsentiert) verglichen werden. Das Anwenderprofil kann unterschiedliche Informationen darüber enthalten, ob der Anwender trotz einer auftretenden Sprechpause vorhat, die Spracheingabe zu ergänzen bzw. fortzusetzen. Beispielsweise kann aufgrund früherer Erfahrungen mit dem Anwender festgestellt werden, dass der Anwender nach automatischer Beendigung einer Sprachanalyse und/oder Sprachaufnahme häufig erneut die Sprachaufnahme gestartet (z.B. einen entsprechenden Knopf gedrückt) hat, im Ansprechen worauf die erlaubte Sprechpause als zu kurz bewertet wurde. Sofern eine der vorgenannten Bedingungen oder eine Vielzahl der vorgenannten Bedingungen vorliegt, wird erfindungsgemäß automatisch eine erlaubte Sprechpause zwischen einer letzten akustischen Eingabe eines Anwenders in ein Mikrofon und einem automatischen Beenden einer Aufnahme vom Mikrofon aufgenommener Signale verlängert. Mit anderen Worten wird auf Basis der obigen Bedingungen vermutet, dass die Sprechpause zwischen einer bereits erfolgten und einer vom Anwender intendierten Sequenz einer Spracheingabe liegt und zur Analyse der intendierten Spracheingabe das Mikrofon eingeschaltet und die Sprachanalyse aktiviert gehalten. Auf diese Weise werden die im Stand der Technik bekannten Anordnungen mit im Wesentlichen informationstechnisch ohnehin vorliegenden Informationen verbessert.

Die Unteransprüche zeigen bevorzugte Weiterbildungen der Erfindung.

Die Schlüsseläußerung, welche darüber Aufschluss gibt, dass der Anwender die Eingabe fortzusetzen gedenkt, kann als Fülläußerung ausgestaltet sein. Insbesondere können Laute, welche der Fahrer zum Überbrücken einer Pause ausgibt, darüber Aufschluss geben, dass auch nach Beendigung des Lautes eine Sprechpause nicht als Abbruch der Spracheingabe zu bewerten ist. Eine Fülläußerung kann beispielsweise "Ähhm", "Hmm" oder "Ähh" sein. Die Schlüsseläußerung kann auch ein Füllwort (z.B. "also" o.ä.) umfassen.

Insbesondere kann die Schlüsseläußerung aufgrund einer Sprechgeschwindigkeit und/oder Intonation als solche erkannt werden. Insbesondere sind eine verringerte Sprechgeschwindigkeit während der Schlüsseläußerung und eine gleichbleibende Tonhöhe Indiz dafür, dass eine solche Schlüsseläußerung vorliegt. Ein Füllwort kann auch einen Fluch (z.B. bezüglich einer Verkehrssituation und/oder aufgrund eines anderen Verkehrsteilnehmers) umfassen, Erstaunen ausdrücken ("Hoppla") oder Desorientierung ("Hä?") bekunden. Die Auswertung von Schlüsseläußerungen kann deutlich schneller und sicherer erfolgen, als eine semantische Untersuchung der vorausgehenden Spracheingabe erfordert.

Bevorzugt kann das erfindungsgemäße Verfahren weiterhin derart ausgestaltet sein, dass ein Überschreiten der Dauer der verlängerten Sprechpause ermittelt wird. Mit anderen Worten kann die Dauer seit einer letzten akustischen Eingabe des Anwenders in das Mikrofon eine erfindungsgemäß verlängerte erlaubte Sprechpause überschreiten. Im Ansprechen darauf werden die Aufnahme der Spracheingabe bzw. anderer Signale mittels des Mikrofons und/oder deren automatische Analyse beendet. Nach Überschreiten der erlaubten Sprechpausendauer wird also das Spracheingabesystem in einen Zustand versetzt, in welchem es keine weiteren Sprachsignale des Anwenders auswertet. Dies verringert die erforderlichen rechentechnischen Ressourcen und ermöglicht eine rasche Ausführung weiterführender Systemaktionen bzw. Reaktionen.

Das Mikrofon kann beispielsweise Befestigungseinrichtungen umfassen, mittels welcher eine dauerhafte Festlegung innerhalb einer Fahrgastzelle eines Fortbewegungsmittels erfolgen kann. Das Mikrofon kann beispielsweise am Fahrerarbeitsplatz des Fortbewegungsmittels angebracht werden. Häufig sind derartige Mikrofone im Bereich einer A-Säule, im Bereich einer Sonnenblende oder im Bereich einer Dachbedieneinheit angeordnet. Die elektrische und informationstechnische Anbindung des Mikrofons an das Energie- und Informationsbordnetz des Fortbewegungsmittels kann daher ebenfalls dauerhaft und/oder drahtgebunden und daher kostengünstig erfolgen.

Bevorzugt kann die Analyse einer Semantik der bereits erfolgten Spracheingabe zur Überprüfung, ob eine Anweisung und/oder ein Satz vollständig ist bzw. sind, fortlaufend erfolgen. Sobald also Sprachsignale eingegangen sind, werden diese analysiert und in Verbindung mit nachfolgend eingehenden Sprachsignalen daraufhin überprüft, ob vollständige Sinneinheiten vom Anwender geäußert wurden. Sofern dies der Fall ist, kann eine automatische Verkürzung der erlaubten Sprechpause zu einer rascheren Systemreaktion und damit zu einer höheren Anwenderakzeptanz führen.

Sofern die Sprachmelodie bzw. Satzmelodie der Spracheingabe im Rahmen des Verfahrens der vorliegenden Erfindung berücksichtigt wird, kann die erlaubte Sprechpause insbesondere dann automatisch verlängert werden, wenn die Spracheingabe eine Frage enthält, ein vordefinierter Hochpunkt der Melodie jedoch noch nicht erreicht ist. Als Hochpunkt wird der die vollständige Frage abschließende Ton bzw. Laut verstanden, wobei sich die Höhe auf die Frequenz des Tons bezieht. Sofern die Spracheingabe keine Frage enthält, wird die erlaubte Sprechpause automatisch verlängert, sofern ein vordefinierter Tiefpunkt der Satzmelodie noch nicht erreicht worden ist. Eine tiefe Frequenz des den Satz abschließende Tones kann das erfindungsgemäße Verfahren daher als intendierten Abschluss der Spracheingabe werten.

Anhand des Komplexitätsgrades der Spracheingabe kann auf die kognitive Belastung des Anwenders bzw. des Sprechenden geschlossen werden. Da mit der kognitiven Belastung die Sprechpausen üblicherweise länger werden, kann bei Ermittlung eines hohen Komplexitätsgrades (z.B. lange Sätze, diktierte Mitteilungen an andere Personen etc.) eine automatische Verlängerung erlaubter Sprechpausen vorgenommen werden. Andernfalls wird die erlaubte Sprechpausenlänge automatisch verringert.

In entsprechender Weise kann eine sonstige Arbeitsbelastung des Anwenders (z.B. durch Interaktion von Bedienelementen am Fahrerarbeitsplatz bzw. durch Auswertung einer Komplexität einer aktuellen Verkehrssituation) die Sprechpausendauer bis zum automatischen Abbruch der Spracheingabe automatisch verlängert werden.

Gemäß einem zweiten Aspekt der vorliegenden Erfindung wird ein Sprachdialogsystem zur Anpassung einer Länge einer erlaubten Sprechpause im Rahmen einer Spracheingabe vorgeschlagen. Das System umfasst einen Signaleingang, an welchen beispielsweise ein Mikrofon angeschlossen sein kann. Zusätzliche Sensoren können zur Ermittlung einer Komplexität einer aktuell vom Anwender ausgeführten Aufgabe (z.B. Fahraufgabe) ausgewertet werden. Hierzu ist eine Auswerteeinheit (z.B. in Form eines Prozessors, eines elektronischen Steuergerätes, o.ä.) vorgesehen, welches auch für Auswerteschritte abseits der vorliegenden Erfindung zum Einsatz gelangen kann. Die Auswerteeinheit ist eingerichtet zu ermitteln, dass die Spracheingabe eine Schlüsseläußerung, einen unvollständigen Satz, eine in vordefinierter Weise charakterisierte Satzmelodie und/oder einen vordefinierten Komplexitätsgrad aufweist. In jedem Fall ist das System eingerichtet, eine zeitliche Überschneidung einer Ausgabe der Anwenderschnittstelle bzw. des erfindungsgemäß ausgestatteten Fortbewegungsmittels mit der Spracheingabe festzustellen und daher die Systemausgabe (ein Pop-up, ein Gong, eine Änderung einer Anzeige, o.ä.) als ursächlich für die Sprechpause zu bewerten. Im Ansprechen auf diese oder eine Vielzahl der vorgenannten Bedingungen in Kombination miteinander wird eine erlaubte Sprechpause zwischen einer letzten akustischen Eingabe des Anwenders und einem automatischen Beenden einer Aufnahme aufgenommener Signale automatisch verlängert. Mit anderen Worten ist das System in der Lage, die Merkmale, Merkmalskombinationen und die sich aus diesen ergebenden Vorteile in entsprechender Weise zu verwirklichen, so dass zur Vermeidung von Wiederholungen auf die diesbezüglichen Ausführungen des ersten Erfindungsaspektes verwiesen wird.

Das System ist bevorzugt weiter eingerichtet, eine Identifikation des Anwenders vorzunehmen, um anhand vordefinierter Eigenschaften des Anwenders eine automatische Verlängerung bzw. Verkürzung der erlaubten Sprechpause vorzunehmen. Der Anwender wird beispielsweise anhand eines vom Anwender verwendeten Schlüssels eines Fortbewegungsmittels identifiziert. Alternativ oder zusätzlich kann eine Stimmenanalyse und/oder eine Gesichtserkennung zur Identifikation des Anwenders durchgeführt werden. Das dem Anwender zugeordnete Anwenderprofil kann in Abhängigkeit objektiver Eigenschaften des Anwenders und/oder aufgrund erfahrungsbasierter Kenntnisse aufgrund einer Verwendung des Systems durch den Anwender ermittelt werden. Beispielsweise kann in einem Datenspeicher ein Datensatz hinterlegt sein, welcher kennzeichnet, dass der Anwender üblicherweise Sprechpausen von drei bis vier Sekunden macht und anschließend die Spracheingabe fortführt. Für einen anderen Anwender kann im Datenspeicher hinterlegt sein, dass dieser üblicherweise keine Sprachpausen länger als zwei Sekunden macht.

Gemäß einem dritten Aspekt der vorliegenden Erfindung wird ein Fortbewegungsmittel (z.B. ein PKW, ein Transporter, ein LKW, ein Motorrad, ein Luft- und/oder Wasserfahrzeug) vorgeschlagen, welches ein Sprachdialogsystem gemäß dem zweitgenannten Erfindungsaspekt aufweist. Auch bezüglich der Merkmale, Merkmalskombinationen und Vorteile des erfindungsgemäßen Fortbewegungsmittels wird auf die obigen Ausführungen verwiesen.

Weitere Einzelheiten, Merkmale und Vorteile der Erfindung ergeben sich aus der nachfolgenden Beschreibung und den Figuren. Es zeigen:
- Figur 1: eine schematische Ansicht eines ersten Ausführungsbeispiels eines erfindungsgemäßen Sprachdialogsystems in einem Ausführungsbeispiel eines erfindungsgemäß ausgestalteten Fortbewegungsmittels;
- Figur 2: ein Beispiel einer Spracheingabe aufweisend einen unvollständigen Satz;
- Figur 3: ein Beispiel einer Spracheingabe aufweisend eine von einer vordefinierten Sprachmelodie abweichende Sprachmelodie;
- Figur 4: ein Beispiel einer Spracheingabe aufweisend eine Schlüsseläußerung; und
- Figur 5: ein Flussdiagramm veranschaulichend Schritte eines Ausführungsbeispiels eines Verfahrens.

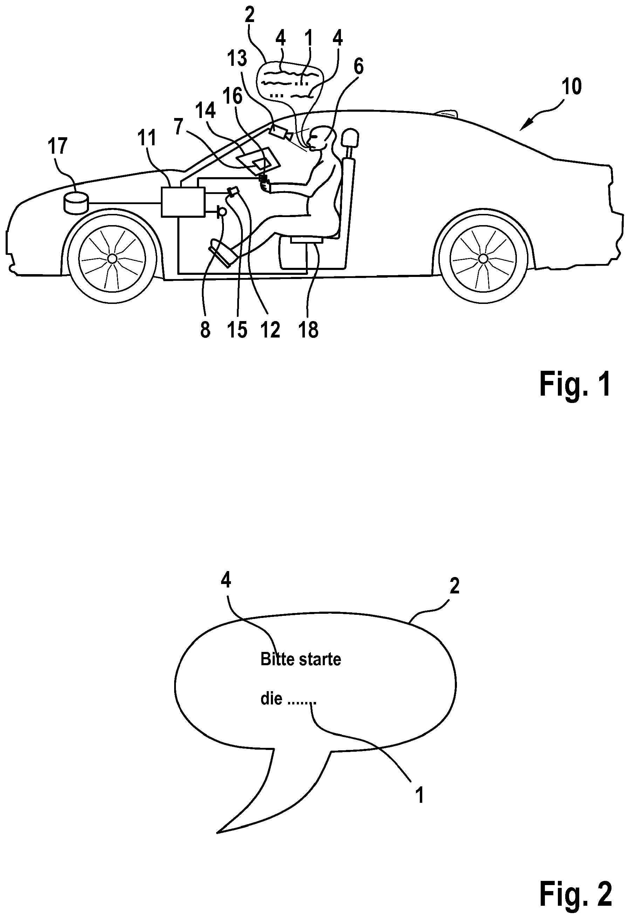

Figur 1 zeigt einen PKW 10 als Fortbewegungsmittel, in welchem ein Anwender 6 auf dem Fahrersitz eines Fahrerarbeitsplatzes sitzt. Der Anwender 6 wird mittels eines Sitzbelegungssensors 18 hinsichtlich seines Gewichtes, mittels einer Innenraumkamera 13 hinsichtlich seiner Gesichtszüge und mittels eines Fahrzeugschlüssels 12, welcher in einem Zündschloss 15 angeordnet ist, identifiziert. Über eine Taste 16, welche informationstechnisch mit einem elektronischen Steuergerät 11 als Auswerteeinheit verbunden ist, aktiviert der Anwender 6 das Spracherkennungssystem. Nachfolgend wird ein erster Teil eines unvollständigen Satzes 4 seiner Spracheingabe 2 über ein Mikrofon 8 erfasst und akustoelektrisch gewandelte Signale an das elektronische Steuergerät 11 weitergeleitet. Mittels in einem Datenspeicher 17 abgespeicherter Instruktionen zur Ausführung eines erfindungsgemäßen Verfahrens ermittelt das elektronische Steuergerät 11 einen ersten Teil eines unvollständigen Satzes 4, welchem eine Sprechpause 1 und ein zweiter Teil des unvollständigen Satzes 4 folgt. Die Sprechpause 1 macht der Anwender 6 aufgrund einer auf einem Bildschirm 14 ausgegebenen Systemmeldung in Form eines Pop-Ups 7. Mit anderen Worten ist der Anwender 6 bei der Ausgabe des Pop-Ups 7 kurzfristig abgelenkt, unterbricht seine Spracheingabe durch die Sprechpause 1 und setzt die Spracheingabe 2 anschließend fort. Aufgrund der Kenntnis der zeitlichen Überschneidung der Spracheingabe 2 und der Ausgabe des Pop-Ups 7 verlängert das erfindungsgemäße System die erlaubte Sprechpausendauer automatisch, um dem Anwender hinreichend Zeit zu lassen, seinen Gedanken zu vervollständigen und die Spracheingabe fertigzustellen.

Figur 2 zeigt ein Beispiel einer Spracheingabe 2, welche einen unvollständigen Satz 4 aufweist, an dessen Ende eine Sprechpause 1 gemacht wird. Der Spracheingabe 2 fehlt ganz offensichtlich ein Objekt, auf welches sich der bestimmte Artikel "die" bezieht. Durch eine semantische Analyse der dargestellten Spracheingabe 2 kann dies ermittelt und daher die erlaubte Dauer der Sprechpause 1 automatisch verlängert werden. Mit anderen Worten wird die Dauer verlängert, bis die Spracheingabeoption automatisch durch das System beendet wird.

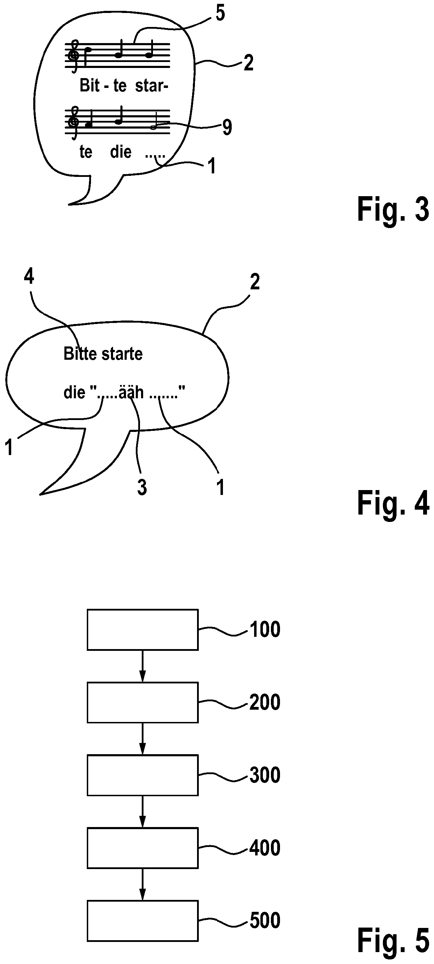

Figur 3 zeigt ein zweites Beispiel für eine Spracheingabe 2, in welcher die Satzmelodie 5 des in Verbindung mit Figur 2 dargestellten unvollständigen Satzes 4 analysiert und das Fehlen eines vordefinierten Tiefpunktes 9 (gepunktet dargestellte Note) zum Anlass genommen wird, die erlaubte Dauer der Sprechpause 1 automatisch zu verlängern und dem Anwender somit mehr Zeit gegeben wird, die Spracheingabe 2 zu vollenden.

Figur 4 zeigt ein Beispiel für eine Spracheingabe 2, in welcher der Anwender eine Schlüsseläußerung in Form eines Füllwortes 3 ("Äh") an das Ende des unvollständigen Satzes 4 fügt, aus welchem geschlossen wird, dass der Vorgang des Verfertigens der Spracheingabe noch nicht abgeschlossen ist, obwohl der Anwender zwei Sprechpausen 1 macht, die Spracheingabe jedoch fortsetzen möchte. Daher wird die erlaubte Dauer der Sprechpausen 1 automatisch verlängert, um den Anwender nicht zusätzlich unter Druck zu setzen.

Figur 5 zeigt Schritte eines Verfahrens zur Anpassung einer Länge einer erlaubten Sprechpause im Rahmen einer Spracheingabe. In Schritt 100 wird ein unvollständiger Satz innerhalb der Spracheingabe ermittelt. Hierzu wird die Semantik der bislang erfolgreich aufgenommenen und interpretierten Spracheingabe untersucht und das Fehlen eines wesentlichen Bestandteils (Subjekt, Objekt, Prädikat, o.ä.) festgestellt. Hierzu wird in Schritt 200 eine fortlaufende Analyse einer Semantik der bislang erfolgten Spracheingabe vorgenommen. In Schritt 300 wird automatisch eine erlaubte Sprechpause zwischen einer letzten akustischen Eingabe des Anwenders und einem automatischen Beenden einer Aufnahme aufgenommener Sprachsignale verlängert. In Schritt 400 wird ermittelt, dass die Dauer seit einer letzten akustischen Eingabe des Anwenders in das Mikrofon die Dauer der verlängerten Sprechpause überschreitet. Im Ansprechen darauf wird in Schritt 500 die Aufnahme und Analyse vom Mikrofon aufgenommener Signale beendet.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste:

- 1: Sprechpause
- 2: Spracheingabe
- 3: Füllwort
- 4: unvollständiger Satz
- 5: Satzmelodie
- 6: Anwender
- 7: Pop-Up
- 8: Mikrofon
- 9: Tiefpunkt
- 10: PKW
- 11: elektronisches Steuergerät
- 12: Fahrzeugschlüssel
- 13: Innenraumkamera
- 14: Bildschirm
- 15: Zündschloss
- 16: Taste
- 17: Datenspeicher
- 18: Sitzbelegungssensor
- 100-500: Verfahrensschritte

## Patentansprüche

1. Verfahren zur Anpassung einer Länge einer erlaubten Sprechpause (1) im Rahmen einer Spracheingabe (2) für ein Sprachdialogsystem, welches eine verbale Kommunikation zwischen einem technischen System und einem Anwender ermöglicht, umfassend die Schritte
- Ermitteln (100), dass die Spracheingabe (2) sich zeitlich mit einer Systemausgabe (7) des technischen Systems überschneidet und im Ansprechen darauf
- automatisches Verlängern (300) einer erlaubten Sprechpause (1) zwischen einer letzten akustischen Eingabe eines Anwenders (6) in ein Mikrophon (8) und einem automatischen Beenden einer Aufnahme vom Mikrophon (8) aufgenommener Signale.

2. Verfahren nach Anspruch 1 weiter umfassend
- Ermitteln (400), dass die Dauer seit einer letzten akustischen Eingabe des Anwenders (6) in das Mikrophon (8) die Dauer der verlängerten Sprechpause (1) überschreitet und im Ansprechen darauf
- Beenden (500) der Aufnahme vom Mikrophon (8) aufgenommener Signale.

3. Verfahren nach einem der vorstehenden Ansprüche, wobei das Mikrophon (8) eingerichtet ist, fest und dauerhaft in ein Fortbewegungsmittel (10) eingebaut zu werden.

4. Verfahren nach einem der vorstehenden Ansprüche weiter umfassend
- fortlaufendes Analysieren (200) einer Semantik der Spracheingabe (2) zur Überprüfung, ob eine Anweisung und/oder ein Satz vollständig ist bzw. sind, und im positiven Falle
- automatisches Verkürzen der erlaubten Sprechpause (1).

5. Verfahren nach einem der vorstehenden Ansprüche, wobei die Satzmelodie (5) der Spracheingabe (2)
- im Falle einer enthaltenen Frage einen vordefinierten Hochpunkt noch nicht erreicht hat oder
- in allen übrigen Fällen einen vordefinierten Tiefpunkt (9) noch nicht erreicht hat.

6. Sprachdialogsystem, welches eine verbale Kommunikation zwischen einem technischen System und einem Anwender ermöglicht, zur Anpassung einer Länge einer erlaubten Sprechpause (1) im Rahmen einer Spracheingabe (2) umfassend
- einen Signaleingang,
- eine Auswerteeinheit (11), wobei die Auswerteeinheit (11) eingerichtet ist zu ermitteln, dass die Spracheingabe (2) sich zeitlich mit einer Systemausgabe (7) des technischen Systems überschneidet und im Ansprechen darauf
- eine erlaubte Sprechpause (1) zwischen einer letzten akustischen Eingabe (4) eines Anwenders (6) in ein Mikrophon (8) und einem automatischen Beenden einer Aufnahme vom Mikrophon (8) aufgenommener Signale automatisch zu verlängern.

7. Sprachdialogsystem nach Anspruch 6, wobei das Sprachdialogsystem weiter eingerichtet ist, eine Identifikation des Anwenders (6) mittels
- eines abgespeicherten Anwenderprofils in Verbindung mit
- einem Schlüssel (12) eines Fortbewegungsmittels (10) und/oder
- einer Stimmenanalyse und/oder
- einer Gesichtserkennung
durchzuführen.

8. Fortbewegungsmittel umfassend ein Sprachdialogsystem nach einem der vorstehenden Ansprüche 6 oder 7.

## Claims

1. Method for adapting the length of a permitted pause in speech (1) during a voice input (2) for a voice dialogue system that facilitates verbal communication between a technical system and a user, comprising the steps of
- ascertaining (100) that the voice input (2) temporally overlaps a system output (7) by the technical system and, in response thereto,
- automatically extending (300) a permitted pause in speech (1) between a last acoustic input by a user (6) into a microphone (8) and automatic termination of a recording of signals recorded by the microphone (8).

2. Method according to Claim 1, further comprising
- ascertaining (400) that the period since a last acoustic input by the user (6) into the microphone (8) exceeds the period of the extended pause in speech (1) and, in response thereto,
- terminating (500) the recording of signals recorded by the microphone (8).

3. Method according to either of the preceding claims, the microphone (8) being designed to be installed in a means of transport (10) firmly and permanently.

4. Method according to one of the preceding claims, further comprising
- continually analysing (200) semantics of the voice input (2) to check whether an instruction and/or a sentence is and/or are complete, and, in the positive case,
- automatically shortening the permitted pause in speech (1).

5. Method according to one of the preceding claims, the intonation (5) of the voice input (2)
- not yet having reached a predefined high point when a question is included or
- not yet having reached a predefined low point (9) in all other cases.

6. Voice dialogue system that facilitates verbal communication between a technical system and a user, for adapting the length of a permitted pause in speech (1) during a voice input (2), comprising
- a signal input,
- an evaluation unit (11), the evaluation unit (11) being designed to ascertain that the voice input (2) temporally overlaps a system output (7) by the technical system and, in response thereto,
- to automatically extend a permitted pause in speech (1) between a last acoustic input (4) by a user (6) into a microphone (8) and automatic termination of a recording of signals recorded by the microphone (8).

7. Voice dialogue system according to Claim 6, the voice dialogue system further being designed to perform identification of the user (6) by means
- of a stored user profile combined with
- a key (12) of a means of transport (10) and/or
- voice analysis and/or
- facial recognition.

8. Means of transport comprising a voice dialogue system according to either of preceding Claims 6 and 7.

## Revendications

1. Procédé pour adapter une longueur d'une pause vocale (1) autorisée dans le cadre d'une entrée vocale (2) pour un système de dialogue vocal, lequel rend possible une communication verbale entre un système technique et un utilisateur, comprenant les étapes suivantes
- détermination (100) que l'entrée vocale (2) se superpose dans le temps avec une émission de système (7) du système technique et, en réaction à cela,
- prolongation automatique (300) d'une pause vocale (1) autorisée entre une dernière entrée acoustique d'un utilisateur (6) dans un microphone (8) et une terminaison automatique d'un enregistrement de signaux capturés par le microphone (8).

2. Procédé selon la revendication 1, comprenant en outre
- détermination (400) du fait que la durée depuis une dernière entrée acoustique de l'utilisateur (6) dans le microphone (8) dépasse la durée de la pause vocale (1) prolongée et, en réaction à cela
- terminaison (500) de l'enregistrement des signaux capturés par le microphone (8).

3. Procédé selon l'une des revendications précédentes, le microphone (8) étant conçu pour être installé en position fixe et à demeure dans un moyen de transport (10) .

4. Procédé selon l'une des revendications précédentes, comprenant en outre
- analyse continue (200) d'une sémantique de l'entrée vocale (2) en vue de vérifier si une instruction et/ou une phrase est ou sont complètes et, dans l'affirmative,
- raccourcissement automatique de la pause vocale (1) autorisée.

5. Procédé selon l'une des revendications précédentes, l'intonation (5) de l'entrée vocale (2)
- n'ayant pas encore atteint un point haut prédéfini dans le cas d'une question incluse ou
- n'ayant pas encore atteint un point bas (9) prédéfini dans tous les autres cas.

6. Système de dialogue vocal, lequel rend possible une communication verbale entre un système technique et un utilisateur, en vue d'adapter une longueur d'une pause vocale (1) autorisée dans le cadre d'une entrée vocale (2), comprenant
- une entrée de signal,
- une unité d'interprétation (11), l'unité d'interprétation (11) étant conçue pour déterminer que l'entrée vocale (2) se superpose dans temps avec une émission de système (7) du système technique et, en réaction à cela,
- pour prolonger automatiquement une pause vocale (1) autorisée entre une dernière entrée acoustique (4) d'un utilisateur (6) dans un microphone (8) et une terminaison automatique d'un enregistrement de signaux capturés par le microphone (8).

7. Système de dialogue vocal selon la revendication 6, le système de dialogue vocal étant en outre conçu pour effectuer une identification de l'utilisateur (6) au moyen
- d'un profil d'utilisateur mémorisé en association avec
- d'une clé (12) d'un moyen de transport (10) et/ou
- d'une analyse de la voix et/un
- d'une reconnaissance faciale.

8. Moyen de transport comprenant un système de dialogue vocal selon l'une des revendications précédentes 6 ou 7.
